# EUROPÄISCHE PATENTANMELDUNG

(11) **EP 1 162 347 A1**
(43) Veröffentlichungstag der Anmeldung: **12.12.2001**
(21) Anmeldenummer: 00112425.4
(22) Anmeldetag: 09.06.2000
(51) Int. Cl.: F01D 25/24, F01D 25/26

(54) **Dampfturbine mit einem geteilten Gehäuse**

(71) Anmelder: SIEMENS AKTIENGESELLSCHAFT, 80333 München (DE)
(72) Erfinder: Haje, Detlef, Dr.-Ing., 46236 Bottrop (DE); Scholl, Lothar, 45481 Mühlheim a. d. Ruhr (DE)

(57) **Zusammenfassung**

Die Erfindung betrifft eine Dampfturbine(30) mit einem ersten Gehäuseteil (32) und mit einem zweiten Gehäuseteil (34), wobei die Gehäuseteile (32, 34) unter Bildung einer Trennfuge (9, 40, 42) aneinander grenzen, und mit einer Anzahl von am Umfang der Gehäuseteile (32, 34) verteilt angeordneten Zugelementen (6), die jeweils die Trennfuge (9, 40, 42) überbrücken. Zur Verbindung der Gehäuseteile (32, 34) sind am Gehäuse Formelemente (7, 8) vorgesehen, zwischen denen die Zugelemente (6) angeordnet sind. Die Anordnung der Zugelemente (6) erfolgt derart, dass durch eine durch die Zugelemente (6) auf die Formelemente (7, 8) ausgeübte Kraft die Gehäuseteile (32, 34) zusammengepresst sind.

## Beschreibung

Die Erfindung betrifft eine Dampfturbine mit einem ersten Gehäüseteil und mit einem zweiten Gehäuseteil, wobei die Gehäuseteile unter Bildung einer Trennfuge aneinander grenzen und dabei insbesondere einen Strömungskanal begrenzen, welcher mit einem Heißdampf unter hohem Druck beaufschlagbar ist. Die Dampfturbine weist zum Verbinden der Gehäuseteile eine Anzahl von am Umfang der Gehäuseteile verteilt angeordneten Zugelementen auf, die jeweils die Trennfuge überbrücken.

Aufgrund der zu erwartenden Dampfparameter zukünftiger Kraftwerke mit einer Dampf- oder Frischdampftemperatur von mehr als 600 ° C und einem Dampfdruck von mehr als 250 bar, werden bei einer Dampfturbine neben den Dampf führenden Rohrleitungen und Leitungsverbindungen auch an die Gehäuseteile entsprechend hohe Anforderungen gestellt. In einer Dampfturbine kann die Verbindungsstelle zwischen Gehäuseteilen, die einen Strömungskanal mit heißem unter hohem Druck stehendem Dampf begrenzen, geschweißt und somit unlösbar oder nach Art einer Flanschverbindung lösbar ausgeführt sein. Derartige Verbindungen sind auch zwischen Rohrleitungen und einem Dampfeinlaßventil einer Dampfturbine sowie zwischen diesem und dem Turbinengehäuse vorgesehen. Während bekannte lösbare Verbindungen aufgrund der temperaturbedingt geringen verbleibenden Werkstoffkennwerten herkömmlicher Werkstoffe nur sehr begrenzt einsetzbar sind, weisen Schweißverbindungen hinsichtlich der Montierbarkeit und der Demontierbarkeit, insbesondere im Revisionsfall, erhebliche Nachteile auf.

Der Einsatz herkömmlicher Verbindungen, beispielsweise Rohr- oder Gehäuseverbindungen, nach Art einer flanschartigen Verschraubung, einer Verschraubung mittels Überwurfmutter oder einer Klammerverbindung ist bei hohen oder höchsten Dampfzuständen aus unterschiedlichen Gründen problematisch. So setzt eine flanschartige Verschraubung die Verfügbarkeit eines Schraubenmaterials ausreichender Festigkeit voraus. Außerdem ist aufgrund des runden Schraubenquerschnitts nur ein begrenzter Anteil der Flanschfläche, d. h. des im Bereich der Verbindungsstelle zwischen zwei Rohrleitungsteilen bzw. Gehäuseteilen verfügbaren Platzes, zur Aufbringung von Zugkräften nutzbar. Darüber hinaus erfordert die runde Aufstandsfläche der Schraubenmutter einen Mindestabstand zu benachbarten Konstruktionselementen, so dass sich die minimalen Flanschaußenabmessungen durch die Außenabmessungen der Gehäuse und durch die Außenabmessungen der Aufstandsfläche ergeben. Der dadurch bedingte Abstand zwischen der Gehäuseaußenwand und der Mitte des Schraubenbolzens bewirkt ein verhältnismäßig hohes Flanschmoment, was insbesondere bei niedrigen verfügbaren Werkstoffkennwerten einen erheblichen Nachteil darstellt. Gleichzeitig wird der entlang der Flanschkontur verfügbare Gesamt-Schaftquerschnitt durch den Mindestabstand zwischen benachbarten Muttern begrenzt.

Geteilte Gehäuse, beispielsweise von Turbomaschinen, d. h. etwa von Gas- oder Dampfturbinen, werden derzeit in aller Regel durch Teilfugenschrauben verbunden. Durch die rotationssymmetrische Gestaltung der Schrauben und Muttern kann nur ein Teil der bereitstehenden Flanschfläche in die Herstellung der Verbindung einbezogen werden, also zur Bereitstellung eines Zugquerschnitts einerseits (Schraubenschaft) und eines Druckquerschnittes andererseits (Mutternaufstandsfläche). Ferner bedingt die runde Mutternaufstandsfläche einen verhältnismäßig großen Abstand zwischen Schraubenachse von benachbarten Konstruktionselementen, z.B. der Gehäuseaußenwand. Dies bewirkt, insbesondere bei großen Gehäuseteilen, wie sie beispielsweise bei Dampfturbinen vorgesehen sind, erhebliche Flanschmomente, welche durch entsprechend massive Flanschgestaltung konstruktiv berücksichtigt werden müssen. Auch ist die Flanschbreite durch die runde Mutternaufstandsfläche bei einem gegebenen Schaftquerschnitt verhältnismäßig groß. Bei geteilten Dampfturbinengehäusen tritt dieses Problem sowohl bei axial geteilten Gehäusen als auch bei horizontal geteilten Gehäusen auf, die über eine jeweilige horizontale bzw. vertikale Trenn- oder Teilungsfuge miteinander verbunden sind.

Bei Verbindungen von Leitungen oder Rohren werden vielfach auch Überwurfmuttern eingesetzt. Bei dieser Verbindung stellt sich insbesondere am Übergang vom zylindrischen Bereich auf den axialen Anlagebereich eine Spannungskonzentration ein. Bei temperaturbedingt niedrigen Werkstoffkennwerten ist bezüglich der Auslegung der Überwurfmutter eine Begrenzung der Kriechverformung in diesem Bereich zu berücksichtigen, was bei hohen Dampfzuständen zu verhältnismäßig großen und somit nur schwierig handhabbaren Bauteilen führt. Da ein Flansch nach dem Einlegen der Überwurfmutter an z.B. das zu verbindende Ventil oder Gehäuseteil angeschweißt werden muss, wird sowohl die Herstellung beim Schweißen entsprechend großer Wandstärken als auch die Baulänge der Verbindung negativ beeinflusst. Darüber hinaus ergibt sich bei hohen Temperaturen ein relativ großer, radialer oder axialer Platzbedarf. Bei geteilten Dampfturbinengehäusen, mit großen Gehäuseteilen, ist diese Variante der Flanschverbindung daher kaum eingesetzt.

Als weitere Lösung bei druck- und temperaturbeaufschlagten Turbinengehäusen, insbesondere bei Dampfturbinengehäusen, ist es bei großen Differenzdrücken zwischen der mit dem Druck behafteten Strömungsmedium beaufschlagten Innenwandung eines Gehäuseteils und der von dem Strömungskanal abgewandten Außenwandung des Gehäuseteils bekannt, sogenannte Schrumpfringe an dafür vorgesehenen Stellen auf die Außenwandung des Gehäuses aufzuschrumpfen. Dieses Konzept wurde beispielsweise bei relativ kompakten Hochdruckteilturbinen ausgeführt. Derartige über den vollen Umfang der Turbine umlaufende Schrumpfringe besitzen jedoch eine große Masse und sind im Hinblick auf die Montage oder Demontage mit einem erheblichen Handhabungsaufwand verbunden. Zudem benötigen sie radialen Bauraum, der sich insbesondere auch durch die erforderliche sukzessive axiale Montierbarkeit der Schrumpfringe ergibt.

Verhältnismäßig große radiale Abmessungen ergeben sich auch bei einer z.B. aus der DE 197 11 580 A1 oder auch aus der DE 24 52 770 A1 bekannten Klammerverbindung, bei der eine Anzahl von Verbindungselementen in Form von klauen- oder klammerartigen Ringsegmenten am Umfang der flanschartigen Verbindung angeordnet sind. Erstgenanntes Dokument bezieht sich dabei auf einen Schnellverschluss-Flansch in Leichtbauweise für den Einsatz im Überdruckbereich bis ca. 100 bar und geht dabei von einer herkömmlichen Flanschverbindung mit einer Anzahl von am Flanschumfang verteilt angeordneten Axialschrauben aus. Mit dieser Flanschverbindung sollen neben Rohrleitungen auch Apparate- und Maschinenteile mit hinreichender Festigkeit miteinander lösbar verbunden werden können. Hierzu sind radial nach außen stehende Flanschflächen vorgesehen, die ringartig und ohne Radialnuten ausgeführt sind. Die Flanschverbindung wird hergestellt mittels einer Anzahl von jeweils ein Ringsegment bildenden Klammern oder Klauen mit C-förmigem Profil. Diese Klammern werden über die beiden Flanschflächen geführt um diese miteinander zu verspannen.Ein umlaufendes Spannband dient zusätzlich zur Erzeugung einer Haltekraft für die Klammern in Radialrichtung nach innen.

Aus der DE 24 52 770 A1 geht eine Rohrverbindung für hohe Druck- und Temperaturbelastung hervor. Die Rohrverbindung ist zur Führung eines gas- oder dampfförmigen Mediums hohen Druckes und hoher Temperatur vorgesehen. Das Dokument offenbart, ausgehend von einer herkömmlichen Schraub-Flanschverbindung insgesamt vier Rohrklammern, die jeweils das Kreissegment eines Quadranten eines im Querschnitt kreisförmigen Flansches umgreifen. Die klammerartigen Verbindungselemente sind untereinander drehgelenkig verbunden, wobei zwei der vier Verbindungsklammern an aneinander zugewandten Enden jeweils einen Gewindeflansch zur Aufnahme einer tangential verlaufenden Spindel aufweisen. Mittels dieser Spindel wird die Gesamtkonfiguration der gelenkig miteinander verbundenen Verbindungsklemmen verspannt.

Bei einer Flanschverbindung, wie sie aus der DE 197 11 580 A1 oder der DE 24 52 770 A1 offenbart sind, besteht bei den Verbindungselementen zudem der Nachteil, dass diese zur Aufnahme der Zugkräfte eine nicht ausreichende Festigkeit aufweisen, zumal die Verbindungselemente infolge des radialen Umgriffs um die Flanschaußenseiten zusätzlich zu einer Zugspannung auch einer Biegebelastung ausgesetzt sind.

Auch ist eine gezielte Kühlung im Bereich derartiger Verbindungen, seien es Rohrverbindungen oder Gehäuseverbindungen von Maschinenteilen, zwischen dem von der Rohrleitung dem Gehäuse geführten Medium und der Flanschverbindung problematisch, da eine Flanschkühlung einen zusätzlichen radialen Abstand zwischen dem Flansch und dem Gehäuseteil für das Kühlmedium erfordert. Durch eine derartige Kühlung können außerdem Wärmeverluste auftreten, die bei einer dampfführenden Leitung oder einem dampfführenden von einem Gehäuse begrenzten Strömungskanal zu einem Verlust an Arbeitsfähigkeit, also einem Energieverlust des geführten Mediums, z.B. des Heißdampfs, führen können.

Der Erfindung liegt daher die Aufgabe zugrunde, für eine Dampfturbine, insbesondere eine geteilte Dampfturbine, mit einem ersten Gehäuseteil und mit einem zweiten Gehäuseteil, wobei die Gehäuseteile unter Bildung einer Trennfuge aneinander grenzen, eine Gehäuseverbindung anzugeben, mit der die vorgenannten Nachteile vermieden sind.

Diese Aufgabe wird erfindungsgemäß gelöst durch eine Dampfturbine mit einem ersten Gehäuseteil und mit einem zweiten Gehäuseteil, wobei die Gehäuseteile unter Bildung einer Trennfuge aneinander grenzen, und mit einer Anzahl von am Umfang der Gehäuseteile verteilt angeordneten Zugelementen, die jeweils die Trennfuge überbrücken, wobei Formelemente am Gehäuse vorgesehen sind, zwischen denen die Zugelemente angeordnet sind, so dass durch eine durch die Zugelemente auf die Formelemente ausgeübte Kraft die Gehäuseteile zusammenpresst sind.

Die derart ausgestaltete Gehäuseverbindung einer Dampfturbine, mit mehreren am Umfang der zu verbindenden Gehäuseteile vorzugsweise gleichmäßig verteilt angeordneten Zugelementen, gewährleistet, bei gleichzeitig hoher Festigkeit auch bei einer hohen Temperatur und einem hohen Druck des in der Dampfturbine geführten Heißdampfs eine besonders kompakte Anordnung der Zugelemente mit im Vergleich zu den bekannten Flanschverbindungen, insbesondere im Vergleich zu den bekannten Klammerverbindungen, besonders geringer radialer Ausdehnung. Darüber hinaus sind Spannungskonzentrationen infolge von Kraftumlenkungen deutlich reduziert. Ferner wird beispielsweise aufgrund einer vorzugsweise symmetrischen Anordnung und insbesondere aufgrund der symmetrischen Gestaltung der Zug- und Formelemente, ein besonders vorteilhafter Kraftausgleich unter Vermeidung einer Biegebelastung im Zugschaft der Zugelemente erreicht. Mit der Gehäuseverbindung sind die Gehäuseteile der Dampfturbine entlang der Trennfuge sicher miteinander verbunden.

In einer bevorzugten Ausgestaltung weist das Zugelement einen Zugschaft und endseitig des Zugschafts Formteile auf. Dabei erstrecken sich die Formteile beidseitig des Zugelements in einer Querrichtung und hintergreifen die Formelemente am der Kontaktfläche des jeweiligen Gehäuseteils abgewandten Ende.

Jedes Gehäuseteil weist hierbei eine Kontaktfläche oder einen Kontaktbereich auf. Durch die Verbindung der Gehäuseteile mittels der Zug- und Formelemente kommen die Gehäuseteile zumindest mit ihren Kontaktflächen in festen Kontakt. Die Kontaktflächen bilden mithin Dichtflächen, die im Zusammenwirken mit den durch die Zugelemente ausgeübten Presskräfte die Gehäuseteile dicht zusammenpressen. Zusätzliche Dichtungselemente können fallweise vorgesehen werden.

Das Hintergreifen oder Übergreifen erfolgt dabei vorzugsweise formschlüssig, wobei die Querrichtung im Wesentlichen parallel zur Trennfuge verläuft. Bei einer horizontal geteilten Dampfturbine mit einer horizontalen Trennfuge entspricht die Querrichtung dann im Wesentlichen der in der Teilungsebene verlaufenden Umfangsrichtung der Gehäuseteile, und entspricht somit im Wesentlichen der Richtung in der die Trennfuge selbst verläuft. Bei axial geteilten Dampfturbinen mit einer in einer Ebene senkrecht zur Turbinenachse verlaufenden Trennfuge, entspricht die Querrichtung bezogen auf die Dampfturbinenachse der Umfangsrichtung, und verläuft somit ebenfalls im Wesentlichen parallel zur Trennfuge.

Vorteilhafterweise ist die Gehäuseverbindung der Dampfturbine neben der Verbindung von Gehäuseteilen auch für die Verbindung von Rohrleitungen, beispielsweise dampfführende Rohrleitungen einer Dampfturbine, einsetzbar.

Durch eine geeignete Ausformung der Formteile des oder jedes Zugelements und der Formelemente am jeweiligen Gehäuseteil kann innerhalb der Formschlussverbindung ein besonders günstiges Verhältnis zwischen Zugquerschnitt des Zugelements und den relevanten Wirkflächen eingestellt werden.

Bezüglich der Zugelemente und deren Formteilen sowie der Formelemente der Gehäuseteile ist eine Variante besonders vorteilhaft, bei der die Formelemente durch am jeweiligen Gehäuseteil angesetzte oder angeformte und somit diskrete radiale Vorsprünge gebildet sind. Eine jeweilige radiale Richtung wird dabei (lokal) durch diejenige Richtung bestimmt, die in einer Ebene parallel zur Kontaktfläche senkrecht zur Trennfuge gehäuseauswärts oder gehäuseeinwärts orientiert ist. Die radialen Vorsprünge können auch durch Einbringen von Nuten in einen am Gehäuseteil angeformten Ringwulst hergestellt werden. Bei dieser Variante sind die endseitig an den sich zwischen benachbarten Vorsprüngen in Längsrichtung erstreckenden Zugschaft des jeweiligen Zugelements vorzugsweise angeformten Formteile zweckmäßigerweise nach Art eines Hammerkopfes ausgebildet. Diese bezüglich der Längsachse des Zugelements nach Art eines I-Trägers spiegelsymmetrisch ausgebildeten Formteile, die somit beidseitig des Zugelements über dessen Schaft in Querrichtung hinausragen, hintergreifen die korrespondierenden Formelemente des jeweiligen Gehäuseteils am der entsprechenden Gehäusemündung, welche die Kontaktfläche aufweist, abgewandten Ende in Gehäuseumfangsrichtung, d. h. in Querrichtung.

In einer bevorzugten Ausgestaltung der Dampfturbine weist jedes Gehäuseteil eine zu dessen Kontaktfläche hin zunehmende Gehäusewanddicke auf, während der Zugschaft des Zugelements auf der den zu verbindenden Gehäuseteilen zugewandten Seite ausgekehlt und somit tailliert oder konkav ausgebildet ist. Bei beiden Ausführungsformen weist das Zugelement einen sich zwischen den Formteilen erstreckenden Zugschaft mit trapezförmiger oder kreissegmentartiger Querschnittsfläche auf. Die Querschnittsfläche kann jedoch auch ringsegmentartig, rechteckig, nierenförmig oder sechseckig sein.

Vorzugsweise sind die Formelemente durch radiale Ausnehmungen in der Wandung des Gehäuses gebildet, wobei hierfür das jeweilige Gehäuseteil entsprechend dickwandig ausgeführt ist. Vorteilhafterweise sind die Formelemente durch radiale Ausnehmungen am jeweiligen Gehäuseteil gebildet. Dies ist herstellungstechnisch besonders einfach und kostengünstig, weil hierdurch, insbesondere bei einer einstückigen Ausführung, keine zusätzlichen separaten Formelemente an die Gehäuseteile angebracht werden müssen. Die Formelemente können auf diese Weise durch einfache materialabtragende Bearbeitungsverfahren, z.B. durch Abdrehen oder Fräsen, von der Gehäusewandung hergestellt werden. Die Zugelemente, deren Formteile formschlüssig in diese Ausnehmungen eingebracht werden, sind bei dieser Variante endseitig vorteilhafterweise nach Art eines einfachen oder doppelten Hammerfußes oder eines Tannenbaumfußes, wie dieser bei Turbinenschaufeln üblich ist, ausgebildet. Auch sind weitere Fügeverbindungsarten denkbar, beispielsweise eine Sägezahn-, eine Haken- oder eine Schwalbenschwanzverbindung. Das jeweilige Formteil des Zugelements weist dann eine entsprechende Anzahl von in Längsrichtung hintereinander liegenden und in der Ausnehmung parallel in Eingriff befindlichen Teilzweigen mit an die Kontur der Ausnehmung angepasster Außenkontur auf, wobei die Teilzweige wiederum in Querrichtung ragen, d. h. sich in diese Richtung erstrecken. Eine besonders bevorzugte Ausführungsform dieser Variante ist ein Tannenbaumkopf am jeweiligen Ende des Zugelements.

Das Zugelement ist vorzugsweise nach Art eines Zugankers vorgespannt. Dadurch wird ein Abheben der Gehäuseteile voneinander etwa infolge einer Druckbeaufschlagung und/oder Temperaturbeaufschlagung eines von den Gehäuseteilen mittelbar oder unmittelbar begrenzten Strömungskanals, sicher und dauerhaft verhindert. Dies wird sowohl bei einem instationären Zustand, z.B. Anfahren bzw. Abfahren, als auch beim stationären Betrieb der Anlage, z.B. einer Dampfturbinenanlage, gewährleistet. Zum Toleranzausgleich und zum Ausgleichen von betriebsbedingten Längungen der Zugelemente sind vorzugsweise zwischen den sich gegenüberliegenden Wirkflächen der Formteile einerseits und der Formelemente andererseits zumindest an einem Ende des Zugelements Beilagen vorgesehen. Dabei kann die oder jede Beilage auf Übermaß gefertigt sein. Auch kann alternativ oder zusätzlich zwischen den Gehäuseteilen ein Dichtelement, insbesondere ein rückfederndes Dichtelement, vorgesehen sein. Das Dichtelement kann hierbei in einer entsprechenden Nut in der Kontaktfläche eines Gehäuseteils eingebracht sein. Auch können die sich gegenüberliegenden Wirkflächen derart zueinander geneigt ausgebildet sein, dass die Beilage in die zwischen den zueinander beabstandeten Wirkflächen gebildete Nut quasi selbständig hineingezogen wird, und hierdurch eine sichere Verspannung des Zugelements einerseits sowie einer Verliersicherung des Zugelements andererseits gewährleistet. Die Ausbildung einer geneigten oder steigenden Wirkfläche am Formelement eines Gehäuseteils und/oder am korrespondierenden Formteil eines Zugelements hat zudem den Vorteil, dass das Formteil des Zugelements bei der Montage in der gewünschten Position gehalten wird. Das Spannen des Zugelements erfolgt hierbei vorzugsweise mittels einer hydraulischen Vorrichtung oder durch thermische Längung des Zugelements. Das Zugelement entfaltet seine Wirkung somit nach dem Zugankerprinzip.

Zur Vermeidung von (lokalen) Spannungskonzentrationen infolge von Kerbwirkungen am sich zwischen den Formteilen erstreckenden Zugschaft des Zugelements weist dieses an dessen den Gehäuseteilen zugewandten Anlageflächen, insbesondere in der Einbaurichtung, vorzugsweise sowohl im Bereich der Formteile als auch entlang des Zugschaftes abgerundete Flächenkanten auf. Diese Flächenkanten sind als entsprechende Rundungen mit geeignet gewähltem Radius ausgestaltet. Alternativ zu den Rundungen können auch Fasen mit geeignet gewählten Abmessungen ausführt werden. Entsprechend weist auch das oder jedes Formelement am Übergang zum der Kontaktfläche zugewandten Ende eines Gehäuseteils abgerundete Flächenecken mit einer der Kantenrundungen des Zugelements entsprechenden Verrundung mit einem bestimmten Rundungsradius oder einer Radienkombination auf. Dadurch sind einerseits Kerbwirkungen begünstigende scharfkantige Flächenkanten innerhalb der Verbindung vermieden. Andererseits ist durch eine Abrundung oder Fase der Flächenkanten und -ecken aneinander angepassten Radien eine besonders dichte Anlage des jeweiligen Zugelements am Gehäuseteil möglich. Hierdurch wird vorteilhafterweise eine sowohl hinsichtlich der Kerbwirkung als auch des Formschlusses angepasste Verbindung von Formteil und Zugelement bereitgestellt. Auch kann, wo dies aus Kühlungserfordernissen gewünscht ist, das oder jedes nach dem Zugankerprinzip arbeitende Zugelement mit einem definierten radialen Spalt zum Gehäuseteil beabstandet angeordnet sein. Dadurch ist die Wärmeeinleitung von innerhalb des Gehäuses, respektive der Gehäuseteile, geführten Heißdampfes über ein Gehäuseteil in den Zuganker deutlich vermindert. Aufgrund der Wärmeübergangswiderstände zwischen dem Heißdampf und dem Zugelement ist hier, sofern eine Kühlung des Zugelements erfolgt, nur eine vergleichsweise geringe Wärmemenge abzuführen. Dies resultiert vorteilhafterweise in einer nur sehr geringen Temperaturabsenkung des Heißdampfs innerhalb des Dampfturbinengehäuse im Betrieb der Dampfturbine.

Die mit der Erfindung erzielbaren Vorteile bestehen insbesondere darin, dass durch eine Gehäuseverbindung mittels Zugelementen, die mit entsprechenden Formelementen an den Gehäuseteilen formschlüssig verbunden sind, eine besonders günstige Aufteilung der verfügbaren Umfangsfläche, insbesondere Verbindungs- oder Kontaktfläche, der Gehäuseteile bei gleichzeitig besonders effizienter Flächenausnutzung erzielt wird. Darüber hinaus treten durch gezielte Anpassung der radialen Erstreckung der Flanschverbindung und der vorteilhaften Aufteilung der verfügbaren Fläche besonders geringe Verformungen der Zugelemente sowie der den Kontaktflächen zugewandten Enden der Gehäuseteile und somit nur geringe mechanische Spannungen innerhalb der Gehäuseverbindung auf. Dadurch, dass die Zugelemente in den durch die Vorsprünge bzw. durch die Ausnehmungen gebildeten radialen Flanschnuten oder Radialnuten einliegen, liegen die Zugelemente an der von den Formelementen radial überragten Gehäuseaußenwand eines Gehäuseteils praktisch unmittelbar an. Dies hat zur Folge, dass eine geringstmögliche radiale Ausdehnung der Verbindung erreicht ist. Das hier vorgestellte Konzept der Verbindung von Gehäuseteilen von geteilten Dampfturbinen ist prinzipiell auch anwendbar auf die Verbindung von dampfführenden, druckbeaufschlagten Rohrleitungen oder Rohrleitungsabschnitten, die einer Dampfturbine zugeordnet oder mit dieser verbunden sind. Als Montagehilfe und zur Fixierung von axial hintereinander angeordneten Rohrleitungsabschnitten, die es zu verbinden gilt, werden vorzugsweise zusätzliche Spannringe eingesetzt, die die über den Umfang einer Rohrleitung angeordneten Zugelemente umfassen und infolge der dadurch bedingten radial einwärts gerichteten Kraft sicher in deren Position halten.

Die Dampfturbine mit der Gehäuseverbindung zum Verbinden von Gehäuseteilen eignet sich sowohl zur Verbindung von axial geteilten Gehäusen oder Gehäuseteilen als auch mit horizontal oder vertikal geteilten Gehäusen oder Gehäuseteilen. Diese können über die Zugelemente in analoger Weise verbunden werden. Gerade bei einer Dampfturbine kommt insbesondere der Vorteil zum tragen, dass die Zugelemente einen sehr geringen radialen Platzbedarf besitzen. Sie können in entsprechender Ausgestaltung zusammen mit Verbindungselementen für eine Längsteilfuge (Schrauben oder Zugelemente) vorteilhaft auch an sogenannten Kreuzteilfugen eingesetzt werden. Letztere können unter Verwendung von herkömmlichen Verbindungen nur sehr schwierig mit ausreichender Dichtwirkung, insbesondere Druck- und Temperaturfestigkeit bei hohen Dampfzuständen, hergestellt werden. Hier schafft das hier vorgestellte Verbindungskonzept für Gehäuse Abhilfe.

Vorzugsweise sind die Zugelemente durch eine geeignete Verliersicherung, beispielsweise durch Stifte, Schrauben oder Bügel, gegen Verlieren und/oder Auswandern aus den Formelementen der Gehäuseteile gesichert. Dabei ist vorteilhaft eine Gestaltung der Anlageflächen und der Beilagen dergestalt, dass die gewünschte Position der formschlüssig miteinander verbundenen Bauteile sich unter der Vorspannkraft und der Betriebskraft quasi selbsttätig einstellt. Relevante Winkel werden dazu so ausgestaltet, dass immer eine radial einwärts wirkende, einrückende Kraft resultiert, welche die Zugelemente, respektive die Beilagen, radial einwärts in die korrespondierenden Formteile hereindrückt.

In vorteilhafter Ausgestaltung weist das Zugelement eine Heizbohrung auf. Durch Beaufschlagung der Heizbohrung mit einem heißen Medium kann das Zugelement dadurch gelängt werden, was für einen Vorspannvorgang besonders dienlich ist. Im Einbauzustand kann die Heizbohrung zudem auch als Kühlbohrung zur Kühlung des Zugelements im Betrieb der Dampfturbine verwendet werden.

Bevorzugt ist das Zugelement sowohl in dessen Längsrichtung als auch in dessen Querrichtung symmetrisch ausgebildet. Hierdurch ist eine besonders günstige und gleichmäßige Kräfteverteilung des Zugelements im Montagezustand, d. h. bei der Verbindung der Gehäuseteile der Dampfturbine, erreicht. Zudem ist die bezüglich zweier Achsen symmetrische Ausgestaltung des Zugelements fertigungstechnisch aus Rohlingen mit einfacher Geometrie, beispielsweise entsprechend vorgeformte metallische Rohlinge, herstellbar. Weiter bevorzugt ist dabei das Zugelement an die Gehäusekontur der Gehäuseteile angepasst. Die Gehäuseteile der Dampfturbine weisen hierbei üblicherweise zumindest lokal eine kreisförmige oder elliptische Kontur auf.

Gleichermaßen vorteilhaft kann die Gehäuseverbindung in einer alternativen und entsprechend angepassten Modifikation für die Verbindung von Rohrleitungen zum Einsatz kommen, wobei die Rohrleitungen beispielsweise dampfführend und einer Dampfturbine zugeordnet oder an diese angeschlossen sind. Gleiches trifft auch für den Einsatz der Gehäuseverbindung für die Verbindung von Rohrleitungen zu, die z.B. einer Dampfturbine zugeordnet oder an diese angeschlossen sind.

Nachfolgend werden Ausführungsbeispiele der Erfindung anhand einer Zeichnung näher erläutert. Darin zeigen teilweise schematisch und vereinfacht:
- FIG 1: in einer perspektivischen Darstellung eine Rohr- verbindung mit einer Anzahl von am Rohrumfang verteilt angeordneten Zugelementen,
- FIG 2: einen Ausschnitt entlang der Linie II-II gemäß FIG 1 mit einer Beilage zwischen einem Zugelement und einem Formelement der Rohrverbindung,
- FIG 3: im Querschnitt einen Kreisausschnitt III-III der Rohrverbindung gemäß FIG 1,
- FIG 4: in perspektivischer Darstellung eine bevorzugte Ausführungsform eines Zugelements,
- FIG 5: in perspektivischer Darstellung die Rohrenden der Leitungsabschnitte mit als radiale Vorsprünge ausgebildeten Formelementen,
- FIG 6: im Längsschnitt ein Rohrende mit Formelementen gemäß FIG 4 und einer modifizierten Ausgestaltung des Zugelements,
- FIG 7: eine alternative Ausgestaltung einer Rohr- oder Gehäuseverbindung mit einer Ausnehmung und mit einem Zugelement mit tannenbaumförmigem Formteil,
- FIG 8: in einem Halbschnitt einen Ausschnitt einer Dampfturbine mit einem ersten Gehäuseteil und mit einen zweiten Gehäuseteil,
- FIG 9: eine Ansicht (Draufsicht) des in FIG 8 gezeigten Ausschnitts eine Dampfturbine entlange einer vertikalen Achse,
- FIG 10: eine Ansicht (Seitenansicht) des in FIG 8 gezeigten Ausschnitts einer Dampfturbine entlang einer horizontalen Achse,
- FIG 11: eine gegenüber FIG 8 modifizierte Ausgestaltung der Gehäuseverbindung der Gehäuseteile,
- FIG 12: eine Gehäuseverbindung für eine Dampfturbine mit axial geteilten Gehäuseteilen,
- FIG 13: eine Gehäuseverbindung für ein mehrfach geteiltes Dampfturbinengehäuse am Beispiel einer Kreuzteilfugenverbindung,
- FIG 14: eine vereinfachte Ansicht des in FIG 13 gezeigten Dampfturbinengehäuses entlang der Schnittlinie XIV-XIV,
- FIG 15, 16: in perspektivischer Darstellung jeweils eine alternative Ausgestaltung des in FIG 4 gezeigten Zugelements.

Einander entsprechende Teile sind in allen Figuren mit den gleichen Bezugszeichen versehen.

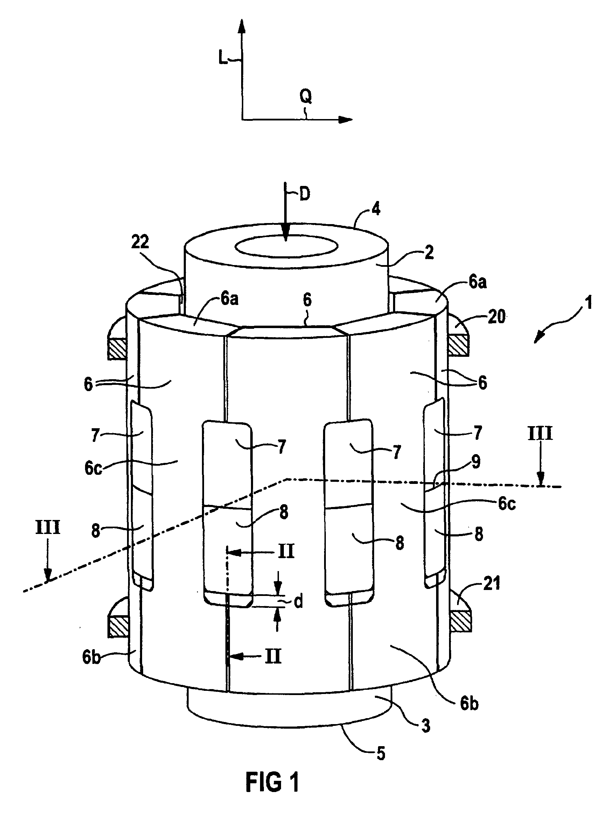

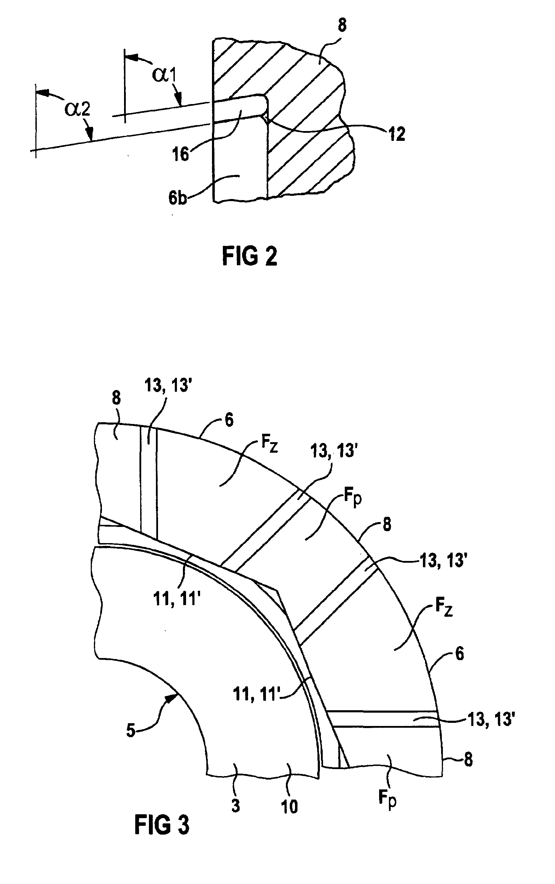

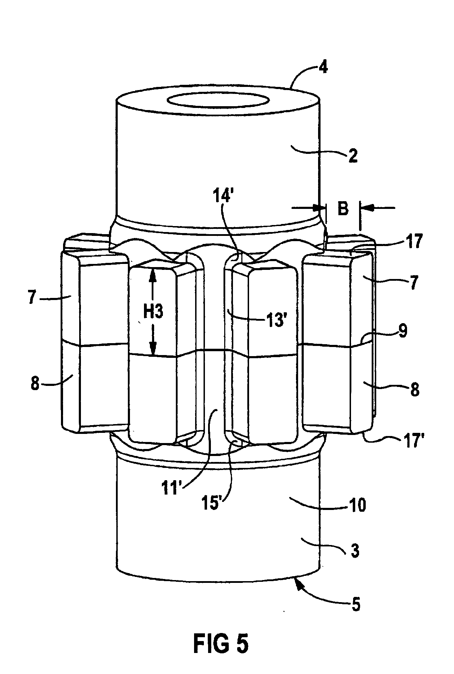

FIG 1 zeigt eine Rohrverbindung 1 im Bereich der Rohrenden 2, 3 von zwei nur ausschnittsweise dargestellten und im Betrieb beispielsweise heißen und unter hohem Druck stehenden Heißdampf D führenden Leitungsabschnitten oder Rohrstücken 4 bzw. 5, die nachfolgend als Rohrleitung bezeichnet sind. Die Rohrleitung kann dabei einer nicht dargestellten, weiter unten näher spezifizierten Dampfturbine zugeordnet oder mit dieser verbunden sein. Der Heißdampf D weist beispielsweise eine Temperatur von mehr als 600 °C und einen Druck von mehr als 250 bar und somit einen hohen Dampfzustand auf, wie er bei zukünftigen Kraftwerken (beispielsweise Dampfkraftwerke oder kombinierte Gas- und Dampfkraftwerke) zur Erzeugung elektrischer Energie zu erwarten ist. Die Rohr- oder Leitungsverbindung 1 weist eine Anzahl von am Umfang der Rohrenden 2, 3 verteilt angeordnete Zugelemente 6 auf, die mit an den Rohrenden 2, 3 angeformten Formelementen 7 bzw. 8 formschlüssig verbunden sind. Die vorzugsweise sowohl in Längsrichtung L als auch in Querrichtung Q symmetrisch ausgebildeten Zugelemente 6 liegen im Montageendzustand in Rohrlängsrichtung L und überdecken dabei die Teilfuge 9 zwischen den Rohrenden 2, 3, d. h. zwischen deren in der FIG 1 nicht sichtbaren Kontaktflächen, zumindest annähernd gleichermaßen. Dazu weist jedes Zugelement 6 endseitig jeweils ein im Ausführungsbeispiel hammerkopfartiges Formteil 6a, 6b auf, zwischen denen sich einstückig mit diesen ein Zugschaft 6c erstreckt. Der Zugschaft 6c des Zugelements 6 erstreckt sich in Rohrlängsrichtung L zwischen in Rohrumfangsrichtung benachbarten Formelementpaaren 7, 8 der Rohrenden 2, 3. Er liegt dort vorzugsweise fast genau in der durch die Formelemente 7, 8 gebildeten Nut mit seiner Anlagefläche 11 direkt an der Außenseite der Rohrwand 10, d. h. an deren korrespondierenden Anlagefläche 11' (vgl. FIG 5) an. Dies ist in FIG 3 in einer Schnittdarstellung entlang der Schnittlinie III-III gemäß FIG 1 veranschaulicht.

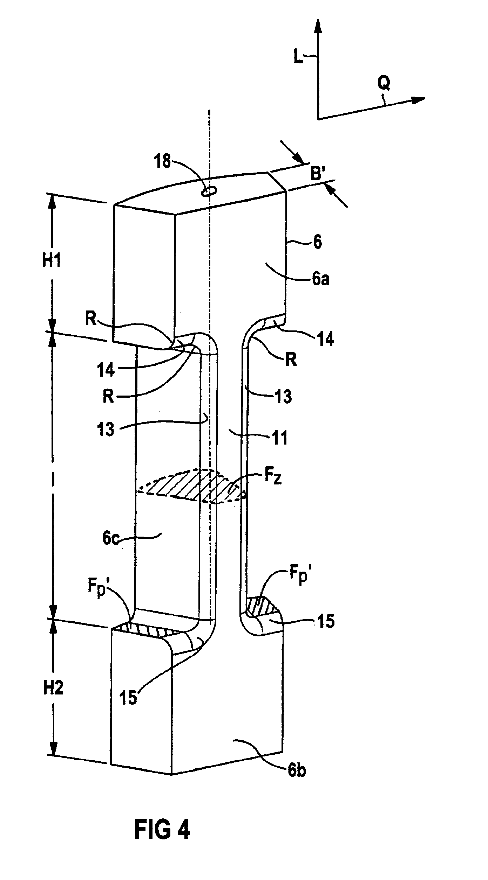

Wie in FIG 3 anhand der Formelemente 8 des Rohrendes 3 veranschaulicht und aus FIG 5 ersichtlich, sind die Formelemente 7, 8 in Form von radialen Vorsprüngen an die Rohraußenwand 10 des jeweiligen Rohrendes 2 bzw. 3 angeformt. Alternativ kann auch ein Ringwulst an die Rohrenden 2, 3 angeformt sein, in den die Zugelemente 6 aufnehmende Nuten eingearbeitet sind. Durch die direkte Anlage der Zugelemente 6 an der Rohraußenwand 10 ist eine besonders günstige Platzausnutzung am Rohrumfang mit geringer radialer Ausdehnung der Rohrverbindung 1 mit der Folge besonders geringer Hebelarme erreicht. Auch ist ersichtlich, dass das Verhältnis zwischen den Zugquerschnitten F_{z} der Zugelemente 6 und der Pressungsflächen F_{P} der Formelemente 7, 8 und der mit diesen korrespondierenden wirksamen Pressungsflächen F'_{P} (FIG 4) der Zugelemente 6 hinsichtlich der Werkstoffgrenzwerte in einfacher Weise anpassbar, insbesondere optimierbar, ist.

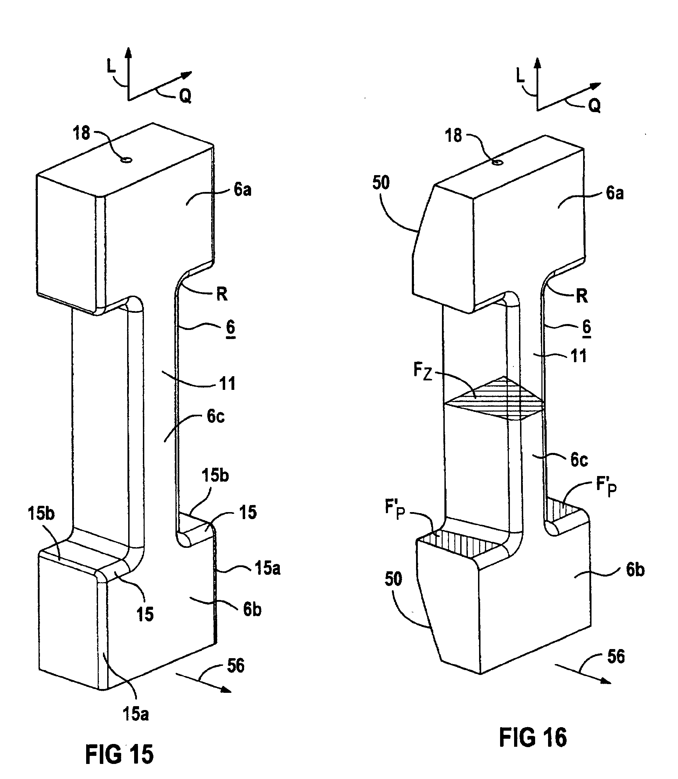

Eine bevorzugte Ausgestaltung des Zugelements 6 ist in FIG 4 dargestellt. Weitere vorteilhafte Ausgestaltungen des Zugelements 6 sind in FIG 15 und 16 dargestellt. Hierbei sind die Zugquerschnittsfläche F_{z} und die Pressungsfläche F'_{P} zur Veranschaulichung schraffiert dargestellt. Das Zugelement 6 (FIG 4) entspricht im Querschnitt, insbesondere bei der Anwendung zur Rohrleitungsverbindung oder zur Gehäuseverbindung von geteilten Dampfturbinengehäusen, einem Segment eines Kreisrings oder Vielecks. Die Flächenkanten 13 im Bereich der Anlagefläche 11 des Zugschaftes 6c sind mit einer Verrundung R, insbesondere einer Fase, versehen. Entsprechend sind auch die sich an diese Flächenkanten 13 anschließenden Flächenkanten 14, 15 der Formteile 6a bzw. 6b im Bereich der Anlagefläche 11 abgerundet, so dass durch diese Verrundungen 13 bis 15 insgesamt eine besonders kerbgünstige Ausgestaltung gegeben ist. Die Höhe H1 und H2 der Formteile 6a bzw. 6b ist im Hinblick auf hinreichend niedrige mechanische Spannungen, d. h. aus einer Kraft quer zum Formteil 6a, 6b resultierende Biege- und Schubspannungen, gewählt.

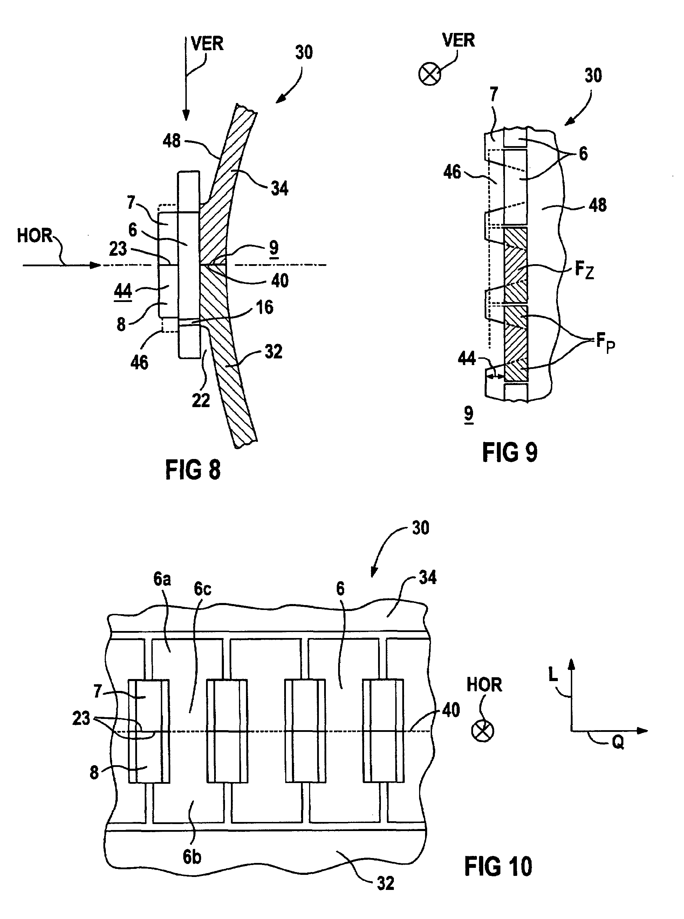

Der Vorteil dieser Ausgestaltung der Zugelemente 6 und der mit diesen innerhalb des Formschlusses korrespondierenden Formelemente 7, 8 der Rohrenden 2 bzw. 3 besteht insbesondere darin, dass die Kraftübertragung sehr nahe am Rohraußendurchmesser und damit an der Rohraußenwand 10 erfolgt. Dadurch ist der radial verfügbare Raum besonders günstig ausgenutzt. Eine derart kompakte Bauweise einer Rohrverbindung 1 wirkt sich vor allem bei den bei hohen Temperaturen vorliegenden niedrigen Werkstoffkennwerten vorteilhaft aus. Insgesamt kann somit ein im Vergleich zu einer herkömmlichen Flanschverbindung erheblich größerer Zugquerschnitt F_{z} realisiert werden. Die Verbindung weist zudem einen günstigen insgesamt zur Kraftübertragung nutzbaren Querschnitt F_{z} + F_{P} auf. Dabei kann das Verhältnis der Pressungsflächen F_{P}, F'_{P} - und damit der Formschlussflächen - zu den Zugquerschnitten F_{z} - und damit zum Zugbereich - der Zugelemente 6 derart gewählt werden, dass die jeweiligen Beanspruchungsgrenzwerte der für das Zugelement 6 und die Rohrenden 2, 3 verwendeten Werkstoffe in besonders hohem Maße effizient genutzt werden können. Durch Analyse der spezifischen Randbedingungen bei Gehäuseverbindungen, insbesondere bei Dampfturbinen mit einem axial, vertikal oder horizontal geteilten Gehäuse, kann das Zugelement 6 in entsprechender Anpassung zur Verbindung von Gehäuseteilen von Dampfturbinen zum Einsatz kommen. Dieser Aspekt der Erfindung wird weiter unten anhand der entsprechenden Ausführungsbeispiele (FIG 8 bis 16) ausführlich diskutiert.

Die Anordnung und Ausgestaltung der Formelemente 7, 8 an den Rohrenden 2, 3 der Rohrleitung 4, 5 sind in FIG 5 dargestellt, die die Rohrenden 2, 3 mit den daran angeformten Vorsprüngen oder Formelementen 7 bzw. 8 ohne Zugelemente 6 zeigt. Im Übergangsbereich zwischen den Formelementen 7, 8 und dem Außenmantel 11' des jeweiligen Rohrendes 2 bzw. 3 sind die Flächenecken 13' bis 15' mit einer entsprechenden Verrundung R, insbesondere einer Fase, versehen. Die Höhe H3 der Formelemente 7, 8 ist im Hinblick auf eine hinreichend niedrige mechanische Spannung festgelegt.

Aus der im Wesentlichen von dem in der Rohrleitung 4, 5 herrschenden Innendruck abhängigen, wirkenden axialen Verbindungskraft einerseits und den zulässigen Pressungen und Zugspannungen andererseits ist die radiale Erstreckung und damit die Breite B, B' (siehe FIG 4) der Formelemente 7, 8 bzw. der Zugelemente 6 bestimmt. Die biegebeanspruchten Vorsprünge oder Formelemente 7, 8 und die Formteile 6a, 6b der Zugelemente 6 können durch Wahl der jeweiligen Höhe H3 bzw. H1, H2 derart gestaltet werden, dass Biege- und Schubspannungen sowie entsprechende Verformungen ausreichend niedrig sind. Die beidseitige, bevorzugt symmetrische Anordnung der Formteile 6a, 6b am Zugelement 6 vermeidet unerwünschte Biegungen im Zugbereich, d. h. im Bereich des Zugschaftes 6c. Dies entspricht dem Konstruktionsprinzip des Kraftausgleiches. Durch diese Verbindungsvorrichtung oder Rohrverbindung 1, die in besonders vorteilhafter und entsprechend angepasster Ausgestaltung auch auf die Verbindung geteilter Dampfturbinengehäuse anwendbar ist, mit einer symmetrischen Anordnung der Formelemente 7, 8 und Formteile 6a, 6b ist sicher gewährleistet, dass Spannungskonzentrationen durch eine gezielte Kraftumlenkung wesentlich reduziert und zugleich ein Bereich mit lediglich einer Zugbeanspruchung ohne jegliche Biegung geschaffen ist. Die Masse eines Zugelements 6 ist hierbei deutlich kleiner als die Masse einer entsprechenden Überwurfmutter, wie sie aus herkömmlichen Rohrverbindungen oder auch Flanschverbindungen bekannt ist.

Die Zugelemente 6 sind vorzugsweise vorgespannt, so dass ein Abheben der Rohrenden 2, 3 voneinander infolge einer Druckbeaufschlagung verhindert ist. Ein Ausgleich von Toleranzen der Bauteile und unvermeidlicher Längungen der Zugelemente 6 bei Wiederverwendung nach langer Betriebzeit unter hohen Temperaturen erfolgt vorteilhafterweise durch Beilagen 16 (siehe z.B. FIG 1 und FIG 2). Die Herstellung der Beilage 16 erfolgt dabei unter Berücksichtigung der tatsächlichen Abmessungen der Bauteile, d. h. insbesondere unter Berücksichtigung des Abstandes zwischen den Anlageflächen 17, 17' und der Formelemente 7 bzw. 8 (siehe FIG 5) der Rohrenden 2, 3 einerseits sowie dem Abstand zwischen den Formteilen 6a, 6b der Zugelemente 6 andererseits. Anhand dieser Abmessungen, d. h. der doppelten Höhe H3 sowie der Länge 1 des Zugschaftes 6c (FIG 4), wird eine erforderliche Beilagendicke d ermittelt und eine entsprechende Beilage 16 hergestellt. Die Beilage 16 gleicht Toleranzen und beim bisherigen Betrieb infolge hoher Temperaturen auftretende Kriechverformungen aus, und bewirkt zusätzlich eine Vorspannung der als Zuganker wirkenden Zugelemente 6. Diese Ausgestaltung wird beispielsweise dadurch realisiert, dass die Beilage 16 mit Übermaß gefertigt ist.

Auch können die sich gegenüberliegenden Wirk- oder Pressflächen F_{P}, F'_{P} derart zueinander geneigt ausgebildet sein, dass die Beilage 16 in die zwischen den zueinander beabstandeten Wirkflächen F_{P}, F'_{P} gebildete Kammer 12 quasi hineingezogen wird. Dies ist in FIG 2, welche einen Schnitt entlang der Schnittlinie II-II gemäß FIG 1 darstellt, illustriert. Dabei sind die Neigungswinkel α₁ und α₂ der Press- oder Wirkflächen F_{P} bzw. F'_{P} übertrieben dargestellt. Die Ausbildung einer geneigten oder steigenden Wirkfläche F_{P}, F'_{P} am Formelement 8 und/oder am Formteil 6b hat weiterhin den Vorteil, dass das Formteil 6b des Zugelements 6 bei der Montage in Position gehalten wird. Die Winkel α₁ und α₂ sollten gemäß der Beziehung α₁ ≤ α₂ ≤ 90 ° gewählt werden.

Nachdem die Zugelemente 6 zwischen die Formelemente 7, 8 eingelegt und an einem Ende, zweckmäßigerweise am Oberende, die entsprechenden Formteilen 6a in Kontakt mit den Formelementen 7 gebracht und dort gegebenenfalls fixiert worden sind, werden die Zugelemente 6 thermisch oder hydraulisch gelängt. Diese Längung erfolgt, bis das Übermaß der Beilagen 16 überwunden ist und diese eingelegt werden können. Zur thermischen Längung ist eine Heizbohrung 18 vorgesehen, die das jeweilige Zugelement 6 in Längsrichtung L durchsetzt (FIG 4, 15, 16). Nach Aufhebung der Längung, üblicherweise infolge Abkühlung, sind die Zugelemente 6 gespannt. Ein Lösen der Verbindung 1 erfolgt in umgekehrter Reihenfolge. Die Anwendung dieses Verbindungskonzepts, wie bisher gezeigt zum Verbinden von Rohrleitungen, kann in vorteilhafter Ausgestaltung und entsprechender Modifikation auch gezielt auf die Verbindung von Gehäuseteilen geteilter Turbinen, insbesondere Dampfturbinen, angewandt werden. Dies wird anhand der FIG 8 bis FIG 16 weiter unten näher erläutert.

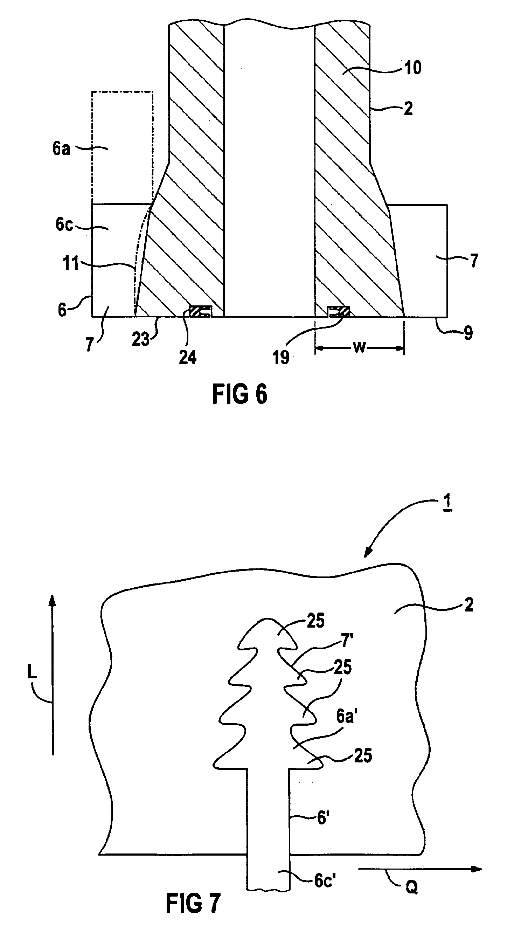

Ein Beispiel für die Anordnung einer rückfedernden Dichtung 19 ist in FIG 6 dargestellt. Die rückfedernde Dichtung 19 kann eventuelle Verformungen der Verbindungspartner, d. h. der Rohrenden 2, 3 und der Zugelemente 6, ausgleichen. Während der Montage wird üblicherweise ein oberer und ein unterer Spannring 20 bzw. 21 um die Verbindung 1, d. h. um die Anordnung der Zugelemente 6 herum gelegt, so dass diese zumindest während der Montage fixiert sind (FIG 1). Diese Ausgestaltung ist insbesondere bei Rohrverbindungen vorteilhaft.

Die Zugelemente 6 können auch gekühlt werden. Eine Kühlung der Zugelemente 6 kann aufgrund der nur indirekten Wärmeleitung von heißem Dampf D zu den Zugelementen 6 auf einfache Weise, beispielsweise durch Kühlrippen oder durch axiale Kühlbohrungen, erfolgen. Aufgrund der Wärmeübergangswiderstände zwischen dem in der Rohrleitung 4, 5 geführten Medium D, z. B. eines Heißdampfes D, und den Zugelementen 6, ist nur eine entsprechend geringe Temperaturabsenkung des Mediums D in der Rohrleitung 4, 5 erfolgt. Zur Kühlung können die Zugelemente 6 mit einem wohl definierten radialen Spalt 22 (vgl. FIG 1) zur Rohrleitung 4, 5 ausgeführt sein, um die Wärmeleitung zusätzlich zu vermindern.

Die Abrundung der Flächenkanten 13 bis 15 des Zugelements 6 und der mit diesen korrespondierenden Flächenecken 13' bis 15' am Rohraußenmantel 10 ist insbesondere bei geringen verbleibenden Werkstoffkennwerten im Hinblick auf eine kerbgünstige Gestaltung der Verbindungspartner 6 und 7, 8 von erheblichem Vorteil. Die Vorspannung kann im Betrieb bei Bedarf durch gezielte Wärmeführung eingestellt werden, z.B. durch eine permanente Temperaturdifferenz zwischen den Zugelementen 6 und den Rohrenden 2, 3. Eventuelle Unterschiede in der thermischen Ausdehnung bei Verwendung unterschiedlicher Werkstoffe für die Zugelemente 6 einerseits, und für die Rohrenden 2, 3 andererseits, können durch Temperaturführung, d. h. durch gezielte Kühlung oder Beheizung, oder auch durch Beilagen 16 mit entsprechend hohen Temperaturausdehnungskoeffizienten, zumindest teilweise ausgeglichen werden.

FIG 6 zeigt eine Variante der Rohrverbindung 1 gemäß FIG 1 mit einer zur Teilfuge 9 und mit einer zur Kontaktfläche 23 des jeweiligen Rohrendes 2, 3 hin zunehmenden, ungestörten Rohrwanddicke w. Dies ermöglicht eine besonders günstige Übertragung der in die Formelemente 7, 8 eingeleiteten Last. In die Kontaktfläche 23 ist eine Ringnut 24 zur Aufnahme einer rückfedernden Dichtung 19 eingeformt. In analoger Weise ist diese Dichtkonfiguration mit einer Dichtung 19, die insbesondere rückfedernd ausgestaltet ist, auf eine dichte Verbindung von einem ersten Gehäuseteil und einem zweiten Gehäuseteil einer Dampfturbine möglich (vgl. etwa FIG 8 und Diskussion hierzu).

Der Zugschaft 6c des Zugelements 6 ist - wie in der linken Figurenhälfte der FIG 6 durch eine strichlinierte Kontur dargestellt - auf seiner den Formelementen 7 zugewandten Seite ausgekehlt, und weist somit in diesem Bereich eine konkave Anlagefläche 11 auf. Das Zugelement 6 weist durch diese Ausgestaltung auf der Höhe der Kontaktfläche 23 des Rohrendes 2 einen zumindest teilweise kerbfreien Bereich auf, an den sich in Richtung des jeweiligen Formteils 6a bzw. 6b ein Bereich mit vergrößertem Querschnitt zur Kerbspannungsreduzierung anschließt. Diese konstruktive Ausgestaltung hat den großen Vorteil, dass im Bereich der Kraftumlenkung, nämlich im Bereich zwischen den Formteilen 6a, 6b und dem Zugschaft 6c zwischen den Formelementen 7, 8 und den Rohrenden 2 bzw. 3, Hohlquerschnitte bereitgestellt sind, die eine besonders geringe Spannungskonzentration an diesen Orten bewirken. Somit ist eine hinsichtlich Kerbwirkungen besonders günstige Gestaltung realisiert.

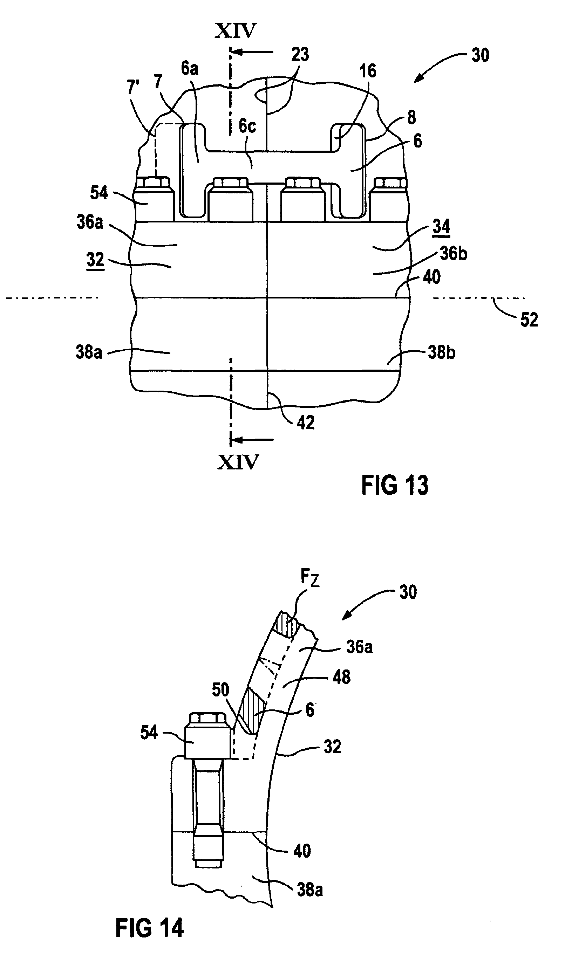

Eine alternative Ausgestaltung der Rohrverbindung 1 zeigt FIG 7 anhand eines Ausschnitts eines der Rohrenden 2, 3. Dort sind die Formelemente 7', 8' durch radiale Ausnehmungen 7', 8' am jeweiligen Rohrende 2, 3 gebildet, wobei hier lediglich z.B. das in der Ausnehmung 7' des Rohrendes 2 eingesetzte Formteil 6a' des Zugelements 6' dargestellt ist. Das Zugelement 6' ist auch bei dieser Ausgestaltung symmetrisch ausgebildet. Die Formteile 6a', 6b' des jeweiligen Zugelements 6' weisen eine Anzahl von in einer Längsrichtung L, insbesondere in Rohrlängsrichtung, hintereinander liegenden und in der Ausnehmung 7', 8' parallel in Eingriff befindlichen Teilzweigen 25 auf. Die Teilzweige 25 der Ausnehmung 7' erstrecken sich dabei nutförmig entlang einer Querrichtung Q. Im gezeigten Ausführungsbeispiel sind die Formteile 6a' 6b' nach Art eines Tannenbaumfußes ausgeformt, wie dieser häufig bei Schaufelfüßen von Turbinenschaufeln (Tannenbaumfuß-Verbindung) Anwendung findet. Es sind auch andere geometrische Formgebungen denkbar, wobei in jedem Fall die Außenkontur des jeweiligen Formteils 6a', 6b' an die Innenkontur der Ausnehmung 7' bzw. 8' angepasst ist, um einen möglichst guten Formschluss zu erzielen, so dass durch eine durch das Zugelement 6' auf das Formelement 7' ausgeübte Kraft die zu verbindenden Teile, beispielsweise Rohrenden 2, 3 der Rohrverbindung 1 oder auch Gehäuseteile einer mehrteiligen Dampfturbine (siehe z.B. FIG 13), fest zusammengepresst sind.

FIG 8 zeigt in einem Halbschnitt einen Ausschnitt einer Dampfturbine 30 mit einem ersten Gehäuseteil 32 und mit einem zweiten Gehäuseteil 34. Die Gehäuseteile 32, 34 grenzen unter Bildung einer Trennfuge 9 aneinander an, wobei die Trennfuge 9 als horizontale Trennfuge 40 ausgebildet ist. Am Umfang der Gehäuseteile 32, 34 ist ein Zugelement 6 vorgesehen, welches die Trennfuge 40 überbrückt. An den Gehäuseteilen Gehäuse 32, 34 sind Formelemente 7, 8 vorgesehen, zwischen denen das Zugelement 6 angeordnet ist, so dass durch eine durch das Zugelement 6 auf die Formelemente 7, 8 ausgeübte Kraft die Gehäuseteile 32, 34 zusammengepresst sind. Durch die Kraftwirkung des Zugelements 6 kommen die Gehäuseteile 32, 34 über ihre jeweilige Kontaktfläche 23 in Kontakt miteinander. Dadurch wird eine sichere und gegenüber Druck und Temperaturbelastung beständige Gehäuseverbindung für die Dampfturbine 30 bereitgestellt.

In FIG 8 ist die Gehäuseverbindung für die Dampfturbine 30 dergestalt, dass ein Flanschüberstand 44 vorgesehen ist, welcher von der Gehäusewand 34 abgewandt radial auswärts gerichtet ist. Der Flanschüberstand 44 ist durch radiale Vorsprünge am jeweiligen Gehäuseteil 32, 34 gebildet, wobei der Flanschüberstand 44 das Formelement 8 des ersten Gehäuseteils 32 sowie das Formelement 7 des zweiten Gehäuseteils 34 umfasst. Eine Verlagerungssicherung 46 für das Zugelement 6 ist entlang einer vertikalen Achse VER unterhalb des Formelements 8 vorgesehen, um die Zugelemente 6 gegen ein Verlieren und/oder Auswandern aus den Formelementen 7, 8 der Gehäuseteile 32, 34 zu sichern. Die Verlagerungssicherung 46 kann beispielsweise durch Stifte, Schrauben oder Bügel ausgestaltet sein, und bildet eine besonders vorteilhafte Variante. Zusätzlich ist zum Toleranzausgleich und zum Ausgleichen von betriebsbedingten Längungen des Zugelements 6 zwischen dem Formelement 8 des Gehäuseteils 32 und dem Zugelement 6 eine Beilage 16 vorgesehen. Dabei kann die Beilage 16 auf Übermaß gefertigt sein. Auch kann alternativ oder zusätzlich zwischen den Gehäuseteilen 32, 34 ein Dichtelement vorgesehen sein, beispielsweise ein rückfederndes Dichtelement, welches in eine entsprechende - in der Figur 8 aus Übersichtsgründen nicht dargestellte - Nut in der Kontaktfläche eines der Gehäuseteile 32, 34 eingebracht ist. Die Wirkungsweise eines derartigen Dichtelements ist dabei in entsprechend angepasster Weise zu dem in FIG 6 diskutierten Ausführungsbeispiel für eine Rohrverbindung.

FIG 9 zeigt eine Ansicht (Draufsicht) des in FIG 8 gezeigten Ausschnitts einer Dampfturbine 30 entlang der vertikalen Achse VER, sowie FIG 10 eine entsprechende Ansicht entlang einer horizontalen Achse HOR. Von der Gehäusewand 48 abgewandt sind radiale Flanschüberstände 44 gebildet, welche zumindest teilweise die Formelemente 7 umfassen. Zwischen zwei entlang der horizontalen Trennfuge 40 zueinander beabstandet angeordneten benachbarten Paaren von Formelementen 7, 8 ist jeweils ein Zugelement 6 angeordnet. Durch die alternierende Anordnung von Zugelementen 6 und Formelementen 7, 8 ergeben sich die durch entsprechend ausgeführte Schraffuren dargestellten Wirkungsflächen, die Pressfläche F_{P} und die Zugquerschnittfläche F_{Z}. Wie aus FIG 10 ersichtlich erfolgt die Anordnung der Zugelemente 6 dergestalt, dass sich die Formteile 6a, 6b beidseitig des Zugelements 6 in einer Querrichtung Q erstrecken und das Formelement 7, 8 am der Kontaktfläche 23 des jeweiligen Gehäuseteils 32, 34 abgewandten Ende hintergreifen.

Eine derart ausgestaltete Gehäuseverbindung einer Dampfturbine 30, mit einer Anzahl am Umfang der zu verbindenden Gehäuseteile 32, 34 verteilt angeordneten Zugelementen 6, gewährleistet, bei gleichzeitig hoher Festigkeit auch bei einer hohen Temperatur und bei einem hohen Druck eines in der Dampfturbine 30 geführten Heißdampfs eine besonders kompakte Anordnung der Zugelemente 6 mit im Vergleich zu den bekannten Flanschverbindungen, insbesondere im Vergleich zu den bekannten Klammerverbindungen, besonders geringer radiale Ausdehnung. Hierbei wird ein besonders vorteilhafter Kraftausgleich unter Vermeidung einer Biegebelastung der Zugelemente 6, vor allem im Bereich des Zugschafts 6c, sicher verhindert.

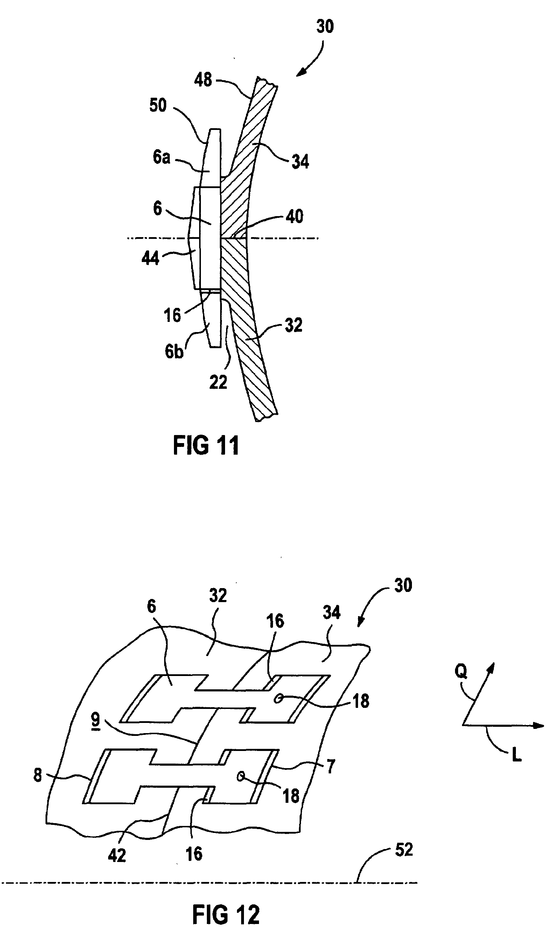

Eine gegenüber FIG 8 modifizierte Ausgestaltung der Gehäuseverbindung einer Dampfturbine 30 mit einem ersten Gehäuseteil 32 und einem zweiten Gehäuseteil 34 ist in FIG 11 dargestellt. Das Zugelement 6 weist im Bereich der Formteile 6a, 6b eine Anpassung 50 auf. Die Anpassung 50 ist hierbei auf der von der Gehäusewand 48 abgewandten Seite des Zugelements 6 gebildet. Der Flanschüberstand 44 ist gegenüber der in FIG 8 gezeigten Ausgestaltung in seinen radialen Dimensionen deutlich reduziert. Diese Ausgestaltung ist bei beschränktem radialen Bauraum besonders vorteilhaft. Beschränkter radialer Bauraum ist beispielsweise bei Dampfturbinen 30 zu berücksichtigen, bei denen die Gehäuseteile 32, 34 als Innengehäuse dienen, die von einem radial beabstandet zu dem Innengehäuse angeordneten Außengehäuse umgeben sind. Durch die Anpassung 50, die am Zugelement 6 vorgenommen ist, ist eine Anpassung an die Gehäusekontur der Gehäusewand 48 erzielt, wodurch der Verbrauch von Bauraum gegenüber dem Ausführungsbeispiel der FIG 8 zusätzlich vermindert ist. Zur Kühlung des Zugelements 6 ist dieses mit einem definierten radialen Spalt 22 von der Gehäusewand 48 beabstandet. Hierdurch wird ein Kühlrippeneffekt erzielt und die Wärmeleitung vermindert.

Eine Gehäuseverbindung für eine Dampfturbine 30 mit axial geteilten Gehäuseteilen 32, 34 ist in FIG 12 gezeigt. Entlang einer Turbinenachse 52 ist ein erstes Gehäuseteil 32 und axial nachgeordnet ein zweites Gehäuseteil 34, über eine Teilfuge 9 aneinander grenzend, angeordnet. Die Trennfuge 9 ist hierbei als axiale Trennfuge 42 ausgestaltet. An den Gehäuseteilen 32, 34 sind Formelemente 7, 8 durch radiale Ausnehmungen am jeweiligen Gehäuseteil 32, 34 gebildet. Zwischen den Formelementen 7, 8 sind Zugelemente 6 angeordnet. Hierbei ist die Ausgestaltung derart, dass jedes der Zugelemente 6 vollständig in die jeweilige radiale Ausnehmung eingelassen ist, wobei das Zugelement 6 über eine Beilage 16 vorgespannt ist, so dass die Gehäuseteile 32, 34 durch die auf die Formelemente 7, 8 ausgeübte Kraft fest zusammengepresst sind. Zur Längung der Zugelemente 6 vor dem Einbau wird ein heißes Medium, z.B. Verbrennungsgase oder heißer Dampf, über eine jeweilige Heizbohrung 18 in dem Zugelement 6 dem Zugelement 6 zugeführt. Im Montageendzustand sind in diesem Ausführungsbeispiel die Zugelemente 6 in den Gehäuseteilen 32, 34 voll integriert. Durch entsprechende Anpassung der Zugelemente 6 an die Kontur der Gehäuseteile 32, 34, die im Wesentlichen lokal zylindrisch um die Turbinenachse 52 vorliegt, ist eine besonders günstige Ausnutzung des verfügbaren Bauraumes erreicht. Bei axial geteilten Dampfturbinen 30 fällt hierbei die Längsrichtung L des Zugelements 6 im Wesentlichen parallel zur Turbinenachse 52 aus, und die Querrichtung Q lokal parallel zur Umfangsrichtung der Gehäuseteile 32, 34 der Dampfturbine 30.

In FIG 13 ist eine Gehäuseverbindung für eine Dampfturbine 30 gezeigt, wobei die Dampfturbine 30 ein mehrfach geteiltes Dampfturbinengehäuse aufweist. Im vorliegenden Fall handelt es sich um eine sogenannte Kreuzteilfugenverbindung, wobei Gehäuseteile 36a, 36b, 38a, 38b entlang einer horizontalen Trennfuge 40 und entlang einer, senkrecht zur horizontalen Trennfuge 40 angeordneten, axialen Trennfuge 42 aneinander grenzen. Ein erstes Gehäuseteil 32 weist hierbei ein oberes Gehäuseteil 36a sowie ein daran angrenzendes unteres Gehäuseteil 38a auf. Ein zweites Gehäuseteil 34, welches entlang der Turbinenachse 52 an das erste Gehäuseteil 32 angrenzend nachgeordnet ist, weist analog ein oberes Gehäuseteil 36b und ein unteres Gehäuseteil 38b auf. Die oberen Gehäuseteile 36a, 36b sind mit den entsprechenden unteren Gehäuseteilen 38a, 38b über eine jeweilige herkömmliche Schraubverbindung 54 miteinander verbunden. Die axiale Verbindung der so zusammengesetzten Gehäuseteile 32, 34 erfolgt mittels eines Zugelements 6 in analoger Weise wie bereits für FIG 12 diskutiert. Als alternative Ausgestaltung des Formelements 7 mit dem Zugelement 6 ist in gestrichelter Darstellung ein Formelement 7' am Gehäuseteil 32 gezeigt, wobei das Formelement 7' gegenüber dem Formelement 7 eine größere axiale Abmessung aufweist. In entsprechender Weise ist in diesem Fall die axiale Dimension des Zugelements 6 anzupassen und auszugestalten. In dieser Alternative fällt somit der Zugschaft 6c des Zugelements 6 entsprechend länger aus, wodurch die axiale Längung des Zugelments 6 vor dem Einbau bei gleichem Kraftaufwand entsprechend vergrößert wird.

In vorteilhafter Weise wird dabei die Höhe H₁ des Formteils 6a derart vergrößert, dass sich eine reduzierte Biegespannung einstellt. Bei dieser Konfiguration ist allerdings der Nachteil eines Verzichts auf die Montierbarkeit bei bereits installierter Verschraubung 54 abzuwägen. In jedem Fall werden mit der in FIG 13 gezeigten Gehäuseanordnung die Vorteile einer Schraubverbindung 54 mit den Vorteilen einer Gehäuseverbindung mittels Zugelementen 6 und Formelementen 7, 8 effizient miteinander kombiniert. Es ist auch möglich, für die horizontale Teilfugenverbindung der oberen Gehäuseteile 36a, 36b mit den entsprechenden unteren Gehäuseteilen 38a, 38b ebenfalls Zugelemente 6 vorzusehen. Zur Illustration der besonders platzsparenden und voll integrierten Anordnung der Zugelemente 6 zur Verbindung der Gehäuseteile 32, 34, zeigt FIG 14 eine vereinfachte Ansicht des in FIG 13 gezeigten Ausschnitts eines Gehäuses einer Dampfturbine 30 entlang der Schnittlinie XIV-XIV. Hierbei ist eine Anpassung 50 der Kontur des Zugelements 6 auf der von der Gehäusewand 48 abgewandeten Seite des Zugelements 6 an die Kontur des Gehäuseteils 32 vorgenommen. Die radialen Abmessungen des Gehäuseteils 32 werden durch die voll integrierte Anordnung des Zugelements nur sehr geringfügig, im Idealfall überhaupt nicht, vergrößert. Bei beschränktem äußeren Bauraum ist diese Ausgestaltung von erheblichem Vorteil.

In FIG 15 und 16 ist in perspektivischer Darstellung jeweils eine alternative Ausgestaltung des in FIG 4 gezeigten Zugelements 6 dargestellt. Die bereits im Zusammenhang mit der FIG 4 diskutierten Merkmale und Vorteile haben in analoger Weise auch für die beiden Varianten von FIG 15 und 16 Gültigkeit. In FIG 15 ist im Vergleich mit der FIG 4 zusätzlich zu den Verrundungen der Flächenkanten 15 auch die angrenzenden Flächenkanten 15a, 15b mit einer entsprechenden Verrundung R ausgeführt. Die angrenzenden Flächenkanten 15a, 15b bilden dabei die Begrenzungskanten der Formteile 6a, 6b entlang der Querachse Q des Zugelements 6. Beim Einsatz in Ausfräsungen oder sonstigen durch Materialabtrag hergestellten Ausnehmungen am Gehäuse einer Dampfturbine 30, sind diese zusätzlichen Verrundungen R der angrenzenden Flächenkanten 15a, 15b besonders vorteilhaft, weil hierdurch eine kerbgünstige Konfiguration im Montageendzustand des Zugelements 6 erzielt ist.

Eine weitere alternative Ausgestaltung des Zugelements 6 mit einer Anpassung 50 ist in FIG 16 illustriert. Die Anpassung 50 ist hierbei an der der Anlagefläche 11 gegenüberliegenden Seite des Zugelements 6 im Bereich der Formteile 6a, 6b vorgesehen. Die Anpassung 50 erfolgt hierbei jeweils an die entsprechende Gehäusekontur des mehrteiligen Dampfturbinengehäuses, wobei das Zugelement 6 in einer Einbaurichtung 56, die im Wesentlichen normal zur Anlagefläche 11 gerichtet ist, zwischen jeweilige Formelemente 7, 8 (vgl. etwa FIG 13) unter Zug zur Verbindung der Gehäuseteile 32, 34 eingesetzt wird. Die wirksame Zugquerschnittsfläche F'_{P} ist dabei beanspruchungsgerecht ausgestaltet, und weist in vorliegendem Beispiel eine keilförmige oder trapezförmige Geometrie auf. Die Formelemente 7, 8 der Gehäuseteile 32, 34 sind dementsprechend mit korrespondierender Geometrie, beispielsweise keilförmig oder trapezförmig, auszubilden, um möglichst gute Anpassung an die jeweilige Beanspruchung der Gehäuseverbindung zu erzielen.

## Patentansprüche

1. Dampfturbine (30) mit einem ersten Gehäuseteil (32) und mit einem zweiten Gehäuseteil(34), wobei die Gehäuseteile (32, 34) unter Bildung einer Trennfuge (9, 40, 42) aneinander grenzen, und mit einer Anzahl von am Umfang der Gehäuseteile (32, 34) verteilt angeordneten Zugelementen (6), die jeweils die Trennfuge (9, 40, 42) überbrücken,
**dadurch gekennzeichnet, dass** Formelemente (7, 8) am Gehäuse (32, 34) vorgesehen sind, zwischen denen die Zugelemente (6) angeordnet sind, so dass durch eine durch die Zugelemente (6) auf die Formelemente (7, 8) ausgeübte Kraft die Gehäuseteile (32, 34) zusammengepresst sind.

2. Dampfturbine (30) nach Ansprüche 1,
**dadurch gekennzeichnet, dass** das Zugelement (6, 6') einen Zugschaft (6c, 6c') aufweist und endseitig des Zugschafts (6c, 6c') Formteile (6a, 6b, 6a') vorgesehen sind, wobei sich die Formteile (6a, 6b, 6a') beidseitig des Zugelements (6, 6') in einer Querrichtung (Q) erstrecken und die Formelemente (7, 8, 7') am der Kontaktfläche (23) des jeweiligen Gehäuseteils (32,34) abgewandten Ende hintergreifen.

3. Dampfturbine (30) nach Anspruch 1 oder 2,
**dadurch gekennzeichnet, dass** die Formelemente (7,8) durch radiale Vorsprünge am jeweiligen Gehäuseteil (32, 34) gebildet sind.

4. Dampfturbine (30) nach Anspruch 1 oder 2,
**dadurch gekennzeichnet, dass** die Formelemente (7') durch radiale Ausnehmungen am jeweiligen Gehäuseteil (32, 34 ) gebildet sind.

5. Dampfturbine (30) nach Anspruch 4,
**dadurch gekennzeichnet, dass** die Formteile (6a') eine Anzahl von in einer Längsrichtung (L) hintereinanderliegenden und in der Ausnehmung (7') parallel in Eingriff befindlichen Teilzweigen (25) aufweisen.

6. Dampfturbine (30) nach einem der Ansprüche 1 bis 5,
**dadurch gekennzeichnet, dass** das Zugelement (6,6') vorgespannt ist.

7. Dampfturbine (30) nach einem der Ansprüche 2 bis 6, **gekennzeichnet durch** eine Beilage (16) zwischen dem Formelement (7, 8) eines der Gehäuseteile (32, 34) und dem Formteil (6a, 6b, 6a') des Zugelements (6).

8. Dampfturbine (30) nach einem der Ansprüche 2 bis 7,
**dadurch gekennzeichnet, dass** der Zugschaft (6c) des Zugelements (6) eine kreissegmentartige oder trapezförmige Querschnittsfläche (F_{z}) aufweist.

9. Dampfturbine (30) nach einem der Ansprüche 2 bis 8,
**dadurch gekennzeichnet, dass** jedes Gehäuseteil (32, 34) eine zu dessen Kontaktfläche (23) hin zunehmende Wanddicke (w) aufweist, und dass der Zugschaft (6c) des Zugelements (6) auf der den Gehäuseteilen (32, 34) insbesondere den Formelementen (7, 8), zugewandten Seite (11) ausgekehlt ist.

10. Dampfturbine (30) nach einem der Ansprüche 2 bis 9,
**dadurch gekennzeichnet, dass** das Zugelement (6) an dessen den Gehäuseteilen (32, 34) zugewandten Anlagefläche (11) im Bereich zwischen den Formteilen (6a,6b) abgerundete Flächenkanten (13 bis 15) aufweist, und dass die Formelemente (7,8) in diesem Bereich mit den Flächenkanten (13 bis 15) korrespondierende Flächenecken (13' bis 15') aufweisen.

11. Dampfturbine (30) nach einem der Ansprüche 1 bis 10,
**dadurch gekennzeichnet, dass** zwischen den Gehäuseteilen (32, 34) eine, insbesondere rückfedernde, Dichtung (19) vorgesehen ist.

12. Dampfturbine (30) nach einem der Ansprüche 1 bis 11,
**dadurch gekennzeichnet, dass** das Zugelement (6) unter Spaltbildung zu den Gehäuseteilen (32, 34) angeordnet ist.

13. Dampfturbine (30) nach einem der Ansprüche 1 bis 12,
**dadurch gekennzeichnet, dass** das Zugelement (6) eine Heizbohrung (18) aufweist.

14. Dampfturbine (30) nach einem der Ansprüche 1 bis 13,
**dadurch gekennzeichnet, dass** das Zugelement (6,6') sowohl in dessen Längsrichtung (L) als auch in dessen Querrichtung (Q) symmetrisch ausgebildet ist.

15. Dampfturbine (30) nach einem der Ansprüche 1 bis 14,
**dadurch gekennzeichnet, dass** das Zugelement (6,6') an die Gehäusekontur der Gehäuseteile (32, 34) angepasst ist.
